# EUROPEAN PATENT APPLICATION

(11) **EP 4 618 396 A1**
(43) Date of publication of application: **17.09.2025**
(21) Application number: 24162597.9
(22) Date of filing: 11.03.2024
(51) Int. Cl.: H02M 3/335, H02M 1/00

(54) **CONTROL METHOD FOR OPERATING A MULTI-PHASE CONVERTER, MULTI-PHASE SERIES RESONANT CONVERTER, MULTI-PHASE LLC RESONANT CONVERTER**

(71) Applicant: Delta Electronics (Thailand) Public Co., Ltd., Samutprakarn 10280 (TH)
(72) Inventor: SOLANKI, Jitendra, 59494 Soest (DE)
(74) Representative: Hoefer & Partner Patentanwälte mbB

(57) **Abstract**

The invention concerns a control method for operating a multi-phase converter (1) with a number N of phases, N being at least three, said converter (1) comprising a transformer (2), a primary side circuit (3) which comprises primary switch legs (4) with primary switches (5) connected to a primary side (6) of the transformer (2), and a secondary side circuit (7) which comprises secondary switch legs (8) each with at least one secondary switch (9) connected to a secondary side (10) of the transformer (2), the number of primary and secondary switch legs (4, 8) respectively corresponding to a number of phases of the multi-phase converter (1), the control method comprising: a boost operation mode comprising a shorting step of shorting the secondary side circuit (7) by controlling a plurality of secondary switches (9) of separate secondary switch legs (8) to be simultaneously ON, wherein said shorting step is repeated periodically within one switching time period T; and/or a phase-modification operation mode comprising a phase-reduction step of reducing an operating phase of said converter (1) by controlling all primary switches (5) of at least one primary switch leg (4) to be simultaneously OFF, wherein said primary switch leg (4) is defined as OFF-leg and the other primary switch leg(s) (4) is/are defined as operating leg(s), and wherein the primary switches (5) of operating leg(s) receive a pulse pattern. The invention also concerns a multi-phase series resonant converter (1) and a multi-phase LLC resonant converter (101).

## Description

### Field of the Invention

The invention concerns a control method for operating a multi-phase converter. The invention further concerns a multi-phase series resonant converter. Further, the invention concerns a multi-phase LLC resonant converter.

### Background of the Invention

US 10790081 B2 discloses three-phase interleaved LLC and CLLC resonant converters, with integrated magnetics. Therein, the primary sides of the phases in the converters rely upon a half-bridge configuration and include resonant networks coupled to each other in delta-connected or common Y-node configurations. The secondary sides of the phases rely upon a full-bridge configurations and are coupled in parallel. The transformers of the phases in the converters are integrated into one magnetic core. By changing the interleaving structure between the primary and secondary windings in the transformers, resonant inductors of the phases are also be integrated into the same magnetic core. A multi-layer PCB is used as the windings for the integrated magnetics.

Further, "Leakage Current Suppression of Three-Phase Flying Capacitor PV Inverter With New Carrier Modulation and Logic Function", from Guo et.al., IEEE Transaction on power electronics, vol. 33, No.3, March 2018, pg. 2127 ff., DOI: 10.1109/TPEL.2017.2692753, discloses modulation techniques for a transformerless three-phase flying capacitor PV inverter for leakage current suppression.

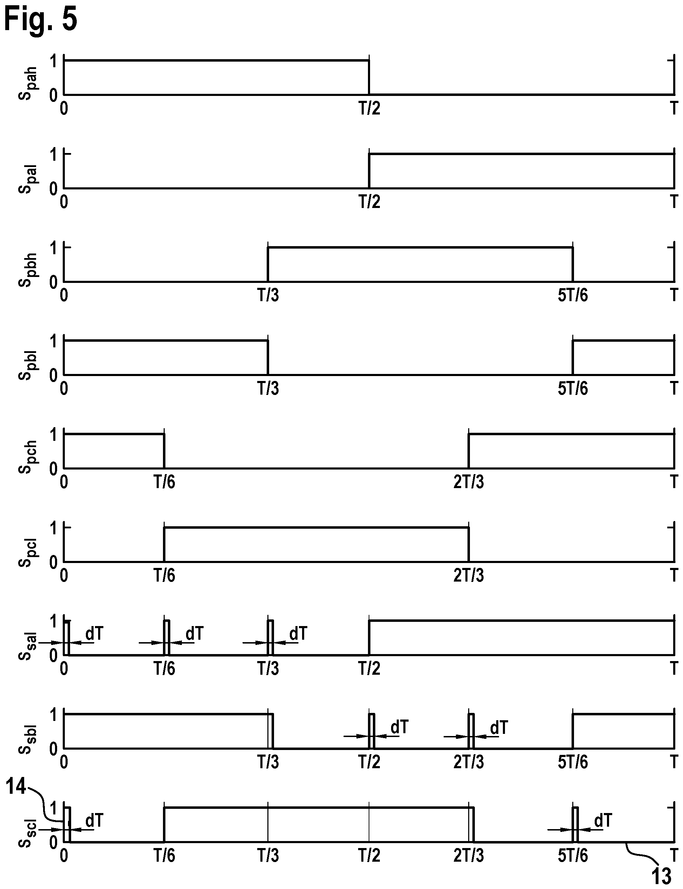

Conventionally, control methods for converters are known from for example US 2022/0014099 A1, which discloses a single- and multi-phase DC/DC converter and a control method thereof with a range of voltage conversion ratio by reducing the switching frequency range. Therein, reduction in the switching frequency range is achieved by controlling the output voltage or current with a combination of variable duty ratio, variable frequency, and delay-time control. Figs. 5A to 5D thereof show a control method for controlling the converter thereof. However, as can be taken from said figures of US 2022/0014099 A1, the resulting primary currents thereof are asymmetric with respect to their positive half-waves and negative half-waves, i.e. have half-wave-asymmetry.

In general, lower voltage requirements, for example from a load, to a converter are met by increasing switching frequency, and vice-versa. This is commonly governed by a so-called gain-curve of the converter. However, common modulation techniques cannot achieve a gain-value of more than one via frequency-modulation. Furthermore, in order to operate at lower voltages, for example to achieve a light-load operation, the switching frequency commonly needs to be increased. Increases in frequency are however limited by practical limits, for example the characteristics of the switches, such that there are upper limits to the frequency.

Therefore, a range of possible output voltages is commonly limited in conventionally known converters and their control methods.

### Summary

It is an object of the present invention to overcome these deficiencies. In particular, it is an object of the present invention to provide a control method for operating a multi-phase converter, a multi-phase series resonant converter, and a multi-phase LLC resonant converter with an improved voltage range, symmetric currents, and increased efficiency.

The solution of these objects is achieved by the subject matter of the independent claims. The dependent claims contain advantageous embodiments of the present invention.

In particular, the solution of these objects is achieved by a control method for operating a multi-phase converter according to claim 1. Therein, the converter comprises a number N of phases, N being at least three. In other words, the converter comprises at least three phases. Furthermore, the converter comprises a transformer, a primary side circuit comprising primary switch legs with primary switches, the primary side circuit being connected to a primary side of the transformer, and a secondary side circuit comprising secondary switch legs with at least one secondary switch, the secondary side circuit being connected to a secondary side of the transformer. The control method comprises the following:
- A boost operation mode comprising a shorting step of shorting the secondary side circuit by controlling a plurality of secondary switches of separate secondary switch legs to be simultaneously ON, wherein said shorting step is repeated periodically within one switching time period T; and/or
- A phase-modification operation mode comprising a phase-reduction step of reducing an operating phase of said converter by controlling all primary switches of at least one primary switch leg to be simultaneously OFF, wherein said primary switch leg is defined as OFF-leg and the other primary switch leg(s) is/are defined as operating leg(s), and wherein the primary switches of operating leg(s) receive a pulse pattern.

The boost operation mode advantageously provides a voltage boost by shorting the secondary side circuit, especially by storing energy in (resonant) inductors of the converter. By carrying out the shorting step repeatedly and periodically within one switching period T, the shorting step(s) occur both during positive and during negative halves of AC voltages imposed by the primary side of the converter. Therefore, the occurring or produced currents are symmetrical (also known as "half-wave-symmetry") with respect to their positive halves and their negative halves. This further avoids DC and even-harmonic currents in the converter and reduces or prevents saturation of inductor(s) and of transformer core(s).

Furthermore, the phase-modification operation mode advantageously provides a reduction of output-voltage without (further) increase in operating frequency of the switches. In some cases, reducing the operating phase of the converter by this method can provide a higher efficiency at certain output-voltages/frequencies. Further yet, in case a voltage requirement to the converter, for example from a load, is lower than the output voltage at a maximum switching frequency, the phase-reduction step can nonetheless provide the lower output-voltage, since the output-voltage with reduced phases is lower than without reduced phases at the same switching frequency.

Therefore, in summary, the control method of the present invention advantageously provides an improved voltage range, symmetric currents, and increased efficiency.

Preferably, the boost operation mode and the phase-modification operation mode are carried out simultaneously. For instance, during the phase-reduction step, the secondary side circuit may be shorted. This has the advantage in that, especially opposed to reverting control to all phases (i.e. not carrying out the phase-reduction), efficiency can be increased. For example, there are cases in which voltage-boosting via shorting with phase-reduction is more efficient than non-voltage-boosting without phase-reduction. Furthermore, there are cases in which operation in non-phase-reduced mode (i.e. in "normal mode", for example in three-phase mode of a three-phase converter) is disadvantageous for certain frequencies, for example due to resonance phenomena at these frequencies. In such cases, it can be advantageous to carry out phase-reduction and simultaneously boost voltage to achieve the desired voltage, but at more advantageous frequencies.

Further preferably, the boost operation mode and the phase-modification operation mode are carried out sequentially, either with or without timely overlap. For example, when charging a battery, the method can start with phase-reduction (low output voltage), transition to non-phase-reduced with high frequency (middle output voltage), and then transition to non-phase-reduced with low frequency (high output voltage) sequentially. Therein, boost mode may be employed sequentially or simultaneously with these foregoing modes, for example after the non-phase-reduced with low frequency mode for even higher output voltage. For smooth voltage output, the foregoing described sequential operation modes may be carried out with some timely overlap, especially of one to several ten switching periods.

Furthermore, the boost operation mode is preferably carried out in transition between non-phase-reduced and phase-reduced operation, i.e. before and/or during the phase-reduction step.

Preferably, in some embodiments, during the shorting step of the boost operation mode, one secondary switch of each secondary switch leg are controlled to be simultaneously ON. Preferably, exactly one switch of each and every secondary switch leg is controlled to be (simultaneously) ON.

In some embodiments, the shorting step is preferably repeated 2N times within one switching period T, N being the number of phases as described above. In particular, for the converter being at least a three-phase converter, the shorting step is preferably repeated at least six times. Preferably, in the three-phase converter, the shorting step is repeated exactly six times within one switching period T.

Preferably, the shorting step is repeated at even time intervals of T = 1/2N. For instance, in the exemplary case of three phases (N = 3), the shorting step is repeated evenly at time intervals of T = 1/6, so at every 1/6^{th} of the one switching time period T. Thereby, especially advantageously symmetric half-waves in the output current are generated.

Preferably, a duration of each shorting step dT is controlled corresponding to voltage gain requirements. A higher duration of each shorting step dT leads to a higher voltage gain. Preferably, the duration of each shorting step dT is identical within at least one switching time period T.

In some preferable embodiments, the secondary side circuit is unidirectional. Therein, the secondary side circuit comprises, on each secondary switch leg, one switch and one diode. Preferably, during the boost operation mode, all secondary switches are controlled to be simultaneously ON during the shorting step.

In some preferable embodiments, the secondary side circuit is bidirectional, wherein each secondary switch leg has one high-side switch and one low-side switch. Preferably, during the shorting step of the boost operation mode, all high-side or all low-side secondary switches are controlled be simultaneously ON.

Preferably, during the shorting step of the boost operation mode in aforementioned bidirectional configuration, only all high-side or only all low-side secondary switches are controlled to be simultaneously ON. In other words, when all high-side secondary switches are ON during the shorting step, no low-side secondary switches are ON, i.e. all low-side secondary switches are OFF, and vice versa. This advantageously provides well-balanced and symmetrical current output.

Further preferably in the bidirectional converter, between repetitions of the shorting step, the control method alternates between shorting all high-side secondary switches and shorting all low-side secondary switches between multiple shorting steps. For example, all high-side secondary switches are ON in a first repetition of the shorting step, and all low-side secondary switches are ON in a second repetition of the shorting step, and all high-side secondary switches are ON in a third repetition of the shorting step, etc. This advantageously provides well-balanced and symmetrical current output. In some preferable embodiments, this alternating control is carried out for all shorting steps within at least one switching time period T. Alternatively, the control preferably does not alternate between some of the multiple shorting steps. For instance: All high-side, all low-side, all low-side, all high-side switches, etc. In the foregoing example, it is alternated twice (i.e. in two pairs) between two shorting steps, but not alternated therebetween.

Preferably, over one switching time period T, an average ON time of all secondary switches is controlled to be substantially equal. In particular, at least the sum of all shorting durations dT for high-side switches and all shorting durations dT of low-side switches are equal over one switching time period T. Thereby, the current output is made especially well-balanced and symmetrical.

In some preferable embodiments, the phase-reduction step comprises increasing a phase shift of pulse signals to primary switches of the operating leg(s). In other words, preferably, the phase shift between pulse signals of primary switches of the operating leg(s) is increased from before the phase-reduction step to during the phase-reduction step.

Preferably, the phase shift is increased to 360°/n, with n being the number of operating legs and equal to or greater than two. For instance, in the case of a three-phase converter, the number of primary switching legs is three, and during the phase-reduction step, the number of OFF-legs is one, while the number of operating legs is two such that n = 2. Therein, for example, the phase shift between the pulse signals is preferably 120° before the phase reduction step, and is preferably 180° (360°/2) during the phase-reduction step. Thus, the phase shift is increased from 120° to 180°. This has the advantage that the converter can be controlled similar to a converter having generally only the present operating legs as primary switch legs (for instance, a converter with two primary switch legs), which greatly enhances the range of possible output voltages of the (present) converter. For instance, a three-phase converter can be operated as a two-phase converter.

It should be noted that the phase shift is not generally limited to only the aforementioned 360°/n, but can also be (additionally) varied depending on required gain characteristics. In general, a reduction in phase shift (without considering the phase reduction step) reduces the output voltage (and the other way around). This further variation for adaptation of the output voltage can be carried out additionally to the aforementioned adaptation to the phase shift for phase-reduction, and is separate and distinct therefrom.

Preferably, the phase-modification operation mode further comprises a phase-increase step of increasing an operating phase of said converter after the phase-reduction step. Therein, the number of operating legs is increased, preferably to the number of operating legs (the total number of primary switch legs) of before the phase-reduction step. For instance, in the aforementioned exemplary three-phase configuration, wherein the number of operating legs is two during the phase-reduction step, the phase-increase step increases the number of operating legs to three. It should be noted that the phase-increase step is not limited to this. For instance, in an exemplary case of a six-phase converter, the phase-reduction step can be carried out so as to have three operating legs, and the subsequent phase-increase step can be carried out so as to have four operating legs. In particular, the phase-increase step is preferably carried out repeatedly, especially so as to sequentially increase the number of operating legs. Preferably, the phase-reduction step can also be carried out sequentially, either in addition or alternative to the aforementioned sequential phase-increase step.

Preferably, the phase-increase step comprises decreasing a phase shift of pulse signals to the primary switches of the operating leg(s). Preferably, the decrease in phase shift is carried out identical to any one of the foregoing descriptions of increasing the phase shift during the phase-reduction step. For instance, the phase shift may be decreased to 360°/n, particularly from 180° to 120° (n = 3).

Preferably, the increase or decrease of phase shift may also be carried out sequentially with sequential phase-reduction or phase-increase.

Further advantageously, the phase-increase step comprises, especially after decreasing the phase angle, supplying the pulse pattern to all primary switch legs. In other words, after the phase-reduction step and the subsequent phase-increase step, preferably normal operation of the multi-phase converter is carried out, i.e. number operating legs being equal to number of primary switch legs.

In some advantageous embodiments, the control method preferably further comprises:
- Receiving an output voltage requirement value,
- Determining an operating frequency requirement value based on the output voltage requirement value,
- Comparing the operating frequency requirement value with a predetermined frequency maximum value, the predetermined frequency maximum value being especially a maximum frequency at which the multi-phase converter can be operated before the phase-reduction step; and
- If the operating frequency requirement value is equal to or higher than the predetermined frequency maximum value, carrying out the phase-reduction step of the phase-modification operation mode.

Therein, the output voltage requirement value is preferably a value corresponding to a voltage required by a load connected to the output of the converter. The operating frequency requirement value is a value which corresponds, using a predetermined relationship between frequency and output voltage, to the required output voltage using all primary switch legs of the converter (i.e. before the phase-reduction step).

Generally speaking, the frequency required to output a voltage will be lower after/during phase-reduction than before/without phase-reduction (i.e. two phases require lower frequency than three phases, for example).

Preferably, the predetermined frequency maximum value is a maximum frequency at which the multi-phase converter can be operated (destruction-free) using all primary switch legs. In particular, this value depends on the characteristics of the components, especially the switches, of the converter. However, said frequency maximum is generally not limited thereto. For instance, the predetermined frequency maximum value can alternatively be a value above which the efficiency of the converter is below a tolerable threshold. Further, for instance, the predetermined frequency maximum value can be a value which considers factors such as longevity/lifetime of the converter, heat generation, stability of output voltage, or a combination of one or more of the foregoing. Thereby, before reaching or exceeding the predetermined frequency maximum value, the phase-reduction step of the phase-modification operation mode is carried out, thereby not only increasing the range of possible output voltages but also protecting the converter from damage or inefficient operation.

In some preferable embodiments, the phase-increase step is carried out if the operating frequency requirement value is equal to or lower than a predetermined frequency threshold value. Therein, the predetermined frequency threshold value is lower than the foregoing described predetermined frequency maximum value. Therein, the predetermined frequency threshold value can be determined similar to the foregoing description of the predetermined frequency maximum value, i.e. take into consideration characteristics of (destruction-free) operating of the converter, its longevity, hear generation, stability of output voltage, or a combination of one or more of these. In particular, at lower frequency, the voltage output and current generated by the converter is high, and the switches are only capable of carrying a maximum current before being damaged. This is advantageously prevented by employing a lower frequency threshold value and increasing the phases in case the required frequency is at or below said frequency threshold value.

Preferably, a gain of the converter at the predetermined frequency threshold value during phase-reduction is at or near the gain of the converter at the predetermined frequency maximum value during non-phase-reduction and/or during phase-increase. In other words, the predetermined frequency threshold value and the predetermined frequency maximum value are set in accordance with the aforementioned gain of the converter so as to be at equal gain. Thereby, overshoot during switching between phase-reduction and phase-increase is reduced or prevented.

In general, the gain of the converter is determined based on circuit parameters such as transformer turns-ratio, resonant inductance, magnetizing inductance and resonant capacitance.

Further advantageously, during a predetermined time period from a start of the phase-increase step, the operating frequency of the multi-phase converter is set to the predetermined frequency maximum value. Thereby, when switching from a reduced-phase operation to an increased-phase or normal phase operation, the output voltage of the converter is kept near or at minimum (i.e. at the frequency maximum value) so as to prevent overshoot and high gain of the converter.

The present invention also concerns a multi-phase series resonant converter (also commonly referred to as an SRC). The converter comprises a transformer, a primary side circuit which comprises primary switch legs with primary switches connected to a primary side of the transformer, and a secondary side circuit which comprises secondary switch legs each with at least one secondary switch connected to a secondary side of the transformer. Therein, the number of primary and secondary switch legs respectively corresponds to a number of phases of the multi-phase series resonant converter. Further, the primary side circuit comprises delta connected resonant capacitors. Delta connected capacitors configuration have advantage of lower current (factor of 1/sqrt(3)) flowing through them as compared to star connected resonant capacitors.

In particular, the SRC comprises discrete inductances in the primary side circuit.

Preferably, the multi-phase SRC further comprises a control unit configured to carry out the control method according to any one of the foregoing descriptions. Therein, the SRC has the advantage of having a high ratio of magnetizing inductance of the transformer to resonant inductance, especially when compared to LLC configurations. In combination with any one of the foregoing control methods, the SRC is provided with a boost function and phase-reduction function, which advantageously provide high-power applications of the SRC.

Further preferably, the multi-phase SRC is unidirectional, wherein each secondary switch leg comprises one secondary switch and one diode in series with one another. Alternatively, the multi-phase SRC is bidirectional, wherein each secondary switch leg comprises two secondary switches in series with one another.

Preferably, without consideration of phase-reduction control, the multi-phase SRC comprises three or more phases, preferably exactly three or exactly six phases.

The present invention also concerns a multi-phase LLC resonant converter. This converter comprises a transformer, a primary side circuit which comprises primary switch legs with primary switches connected to a primary side of the transformer, and a secondary side circuit which comprises secondary switch legs each with at least one secondary switch connected to a secondary side of the transformer. Therein, the number of primary and secondary switch legs respectively corresponds to a number of phases of the multi-phase LLC resonant converter. Furthermore, the converter comprises a control unit configured to carry out the control method according to any one of the foregoing descriptions.

The foregoing described multi-phase SRC and the foregoing described multi-phase LLC resonant converter preferably comprise delta connected resonant capacitors. In other preferable embodiments, the SRC and the LLC comprise star connected resonant capacitors. In both cases, the SRC and the LLC are configured to be controlled via the foregoing described embodiments of the control method.

The foregoing described preferable embodiments and configurations may be suitably combined. In particular, any one of the aforementioned converters can be controlled by any one of the aforementioned control methods. Further, preferably, the boost operation mode and the phase-modification operation mode according to any one of the foregoing descriptions can be carried out simultaneously, alternatingly or alternatively to one another.

Further details, advantages, and features of the preferred embodiments of the present invention are described in detail with reference to the figures. Therein:

### Brief Description of the Drawings

Fig. 1 shows a circuit diagram of a multi-phase series resonant converter according to a first embodiment of the present invention;
Fig. 2 shows a timing diagram for a control method for operating a multi-phase converter according to a second embodiment of the present invention;
Fig. 3 shows a current waveform output by the multi-phase converter controlled by the method of Fig. 2;
Fig. 4 shows a circuit diagram of a multi-phase series resonant converter according to a third embodiment of the present invention;
Fig. 5 shows a timing diagram for a control method for operating a multi-phase converter according to a fourth embodiment of the present invention;
Fig. 6 shows a timing diagram for a control method for operating a multi-phase converter according to a fifth embodiment of the present invention;
Fig. 7 shows a flow chart for carrying out the control method according to the fifth embodiment of the present invention; and
Fig. 8 shows a circuit diagram of a multi-phase LLC converter according to a sixth embodiment of the present invention.

### Description of the Embodiments

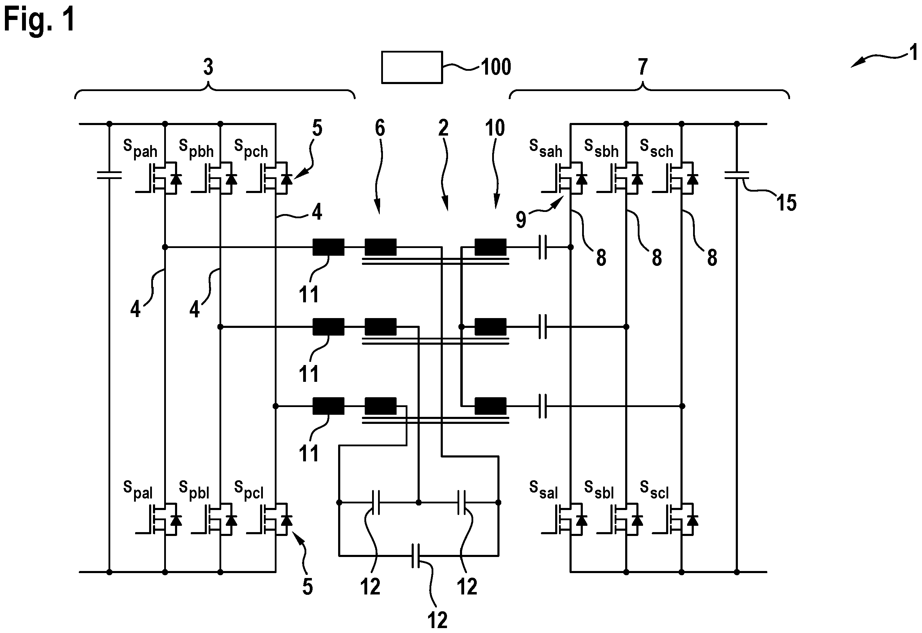

A first embodiment of the present invention will be described with reference to Fig. 1. Therein, Fig. 1 shows a circuit diagram of a multi-phase series resonant converter 1 (henceforth SRC 1) according to a first embodiment of the present invention.

The SRC 1 comprises a transformer 2, a primary side circuit 3 which comprises primary switch legs 4 with primary switches 5 connected to a primary side 6 of the transformer 2, and a secondary side circuit 7 which comprises secondary switch legs 8 each with at least one secondary switch 9 connected to a secondary side 10 of the transformer 2.

Therein, the number of primary and secondary switch legs 4, 8 respectively corresponds to a number of phases of the multi-phase SRC 1, and is in the present embodiment three (i.e. a three-phase SRC 1).

Herein, resonant inductances 11 are discrete elements.

Further, as can be taken from the circuit diagram of Fig. 1, the primary side circuit 3 comprises delta connected series resonant capacitors 12. The delta connection of the series resonant capacitors 12 provides the advantage of lowering the current by a factor of 1/sqrt(3) flowing through the capacitors 12 as compared to star connected resonant capacitors (not shown).

It should be noted that in Fig. 1, the switches 5, 9 include further references, for example Spah, Spbh, Spch, etc., which will be used in the following description of a control method for operating the SRC 1. Therein, "Sp" refers to a switch 5 of the primary circuit 3, and "Ss" refers to a switch 9 of the secondary circuit 7. Further "Spa, Spb, Spc", particularly "a, b, c" enumerate the switches 5, 9. Lastly, "h" refers to "high-side" and "l" refers to "low-side", such that "Spah" is for example a first primary switch 5 on the high-side of the SRC 1.

The converter 1 further comprises a control unit 100 configured to carry out the control method according to the following descriptions. The control unit 100 is particularly connected to gates of the switches 5, 9 so as to control the operation of the SRC 1. For the sake of simplifying the figure, the connection scheme of the control unit 100 is not shown.

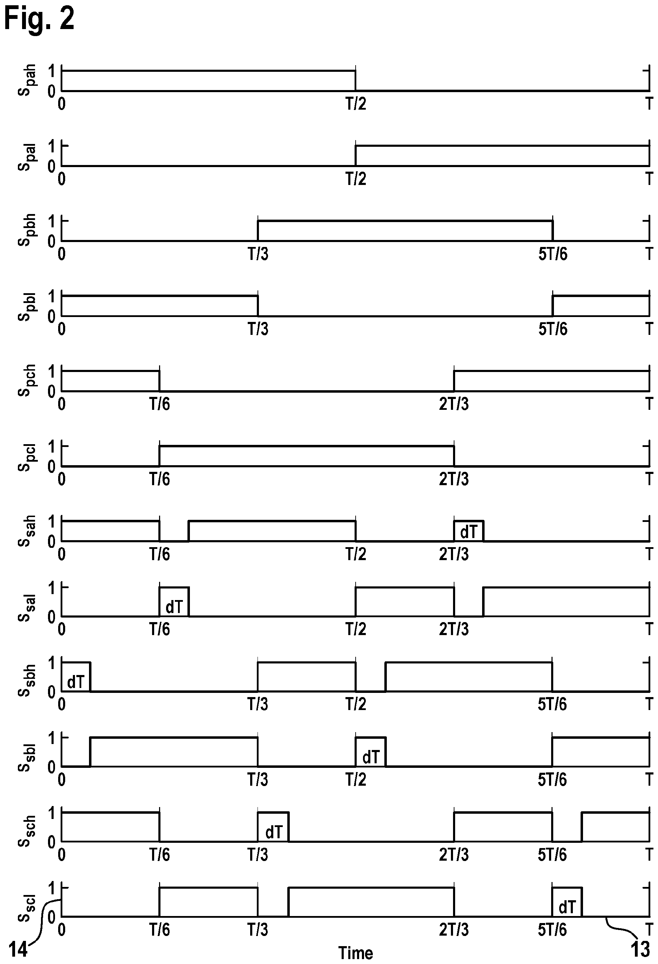

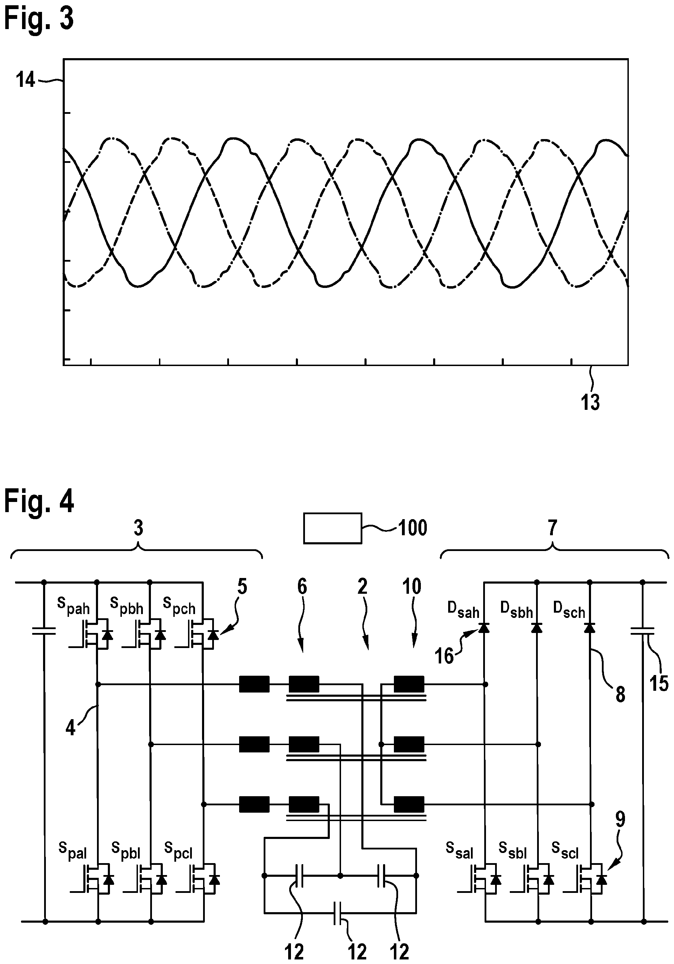

Now, with reference to Figs. 2 and 3, a control method according to a second embodiment of the present invention will be explained. Therein, Fig. 2 shows a timing diagram for a control method for operating a multi-phase converter 1, and Fig. 3 shows a current waveform output by the multi-phase converter 1 controlled by the method of Fig. 2.

It should be noted that the control method of the present embodiment is not particularly limited to being employed to the SRC 1 of Fig. 1. For instance, the following control method can also be employed for LLC's or SRC's with respectively multiple phases, their number not being particularly limited, and preferably three-phase or six-phase LLC's or SRC's.

In Fig. 2, an abscissa 13 denotes time from 0 to one full switching period T and an ordinate 14 denotes switching state, wherein "1" is equal to ON, and "0" is equal to OFF. Each of the graphs of Fig. 2 represents one switch 5, 9 (with aforementioned nomenclature) of Fig. 1.

In Fig. 3, an abscissa 13 denotes time in ms and an ordinate 14 denotes current in A. the three curves correspond to the current output by each of the three phases of the SRC 1 shown in Fig. 1.

In the present embodiment, the control method comprises a boost operation mode. Therein, a shorting step of shorting the secondary side circuit 7 is carried out by controlling a plurality of secondary switches 9 of separate secondary switch legs 8 to be simultaneously ON. For example, starting from t = 0, the secondary switches 9 Ssah, Ssbh, and Ssch are ON, thereby shorting the secondary side circuit 7. This shorting causes energy to be stored in resonant inductors, which is then transferred to an output capacitor 15 (see Fig. 1) after the switches are turned back OFF.

Further, said shorting step is repeated periodically within one switching time period T, i.e. from t = 0 to t = T. In this regard, the term "periodically" refers to equal intervals between shorting steps.

In Fig. 2, not only the shorting steps are shown, but also synchronous rectification pulse patterns. Thereby, it can be seen that especially the secondary switches 9 carry out synchronous rectification as well as boost operation mode via the shorting. The shorting steps are independent and in addition to the synchronous rectification pulse patterns.

By carrying out the shorting step repeatedly and periodically within one switching period T, the shorting step(s) occur both during positive and during negative halves of AC voltages imposed by the primary side 3 of the converter 1. Therefore, the occurring or produced currents shown in Fig. 3 are symmetrical (also known as "half-wave-symmetry") with respect to their positive halves and their negative halves. This further avoids DC and even-harmonic currents in the converter 1 and reduces or prevents saturation of inductor(s) and of core(s) of the transformer 2.

Herein, during the shorting step of the boost operation mode, exactly one switch 9 of each and every secondary switch leg 8 is controlled to be simultaneously ON.

Further, the shorting step is repeated 2N times within one switching period T, N being the number of phases. In this embodiment, in the three-phase SRC 1, the shorting step is repeated exactly six times within one switching period T.

Therein, the shorting step is repeated at even time intervals of T = 1/2N. In the present example, this means that the shorting step is repeated evenly at time intervals of T = 1/6, so at every 1/6^{th} of the one switching time period T. Thereby, especially advantageously symmetric half-waves in the output current are generated, as shown in Fig. 3.

Preferably, a duration of each shorting step dT is controlled corresponding to voltage gain requirements. A higher duration of each shorting step dT leads to a higher voltage gain. Preferably, the duration of each shorting step dT is identical within at least one switching time period T.

In the present embodiment with respect to controlling the SRC 1 of Fig. 1, the secondary side circuit 7 is bidirectional, wherein each secondary switch leg 8 has one high-side switch (Ssah, Ssbh, Ssch) and one low-side switch (Ssal, Ssbl, Sscl). Preferably, during the shorting step of the boost operation mode, all high-side (Ssah, Ssbh, Ssch) or all low-side secondary switches (Ssal, Ssbl, Sscl) are controlled be simultaneously ON.

Herein, when all high-side secondary switches (Ssah, Ssbh, Ssch) are ON during the shorting step, no low-side secondary switches (Ssal, Ssbl, Sscl) are ON, i.e. all low-side secondary switches (Ssal, Ssbl, Sscl) are OFF, and vice versa. This advantageously provides well-balanced and symmetrical current output.

As can be further taken from Fig. 2, between repetitions of the shorting step, the control method alternates between shorting all high-side secondary switches (Ssah, Ssbh, Ssch) and shorting all low-side secondary switches (Ssal, Ssbl, Sscl) between multiple shorting steps. This advantageously provides well-balanced and symmetrical current output.

Preferably, over one switching time period T, an average ON time of all secondary switches 9 is controlled to be substantially equal. In particular, at least the sum of all shorting durations dT for high-side switches and all shorting durations dT of low-side switches are equal over one switching time period T. Thereby, the current output is made especially well-balanced and symmetrical.

Now, with reference to Figs. 4 and 5, the foregoing control method with regard to a unidirectional converter 1 will be described. Therein, Fig. 4 shows a circuit diagram of a multi-phase series resonant converter 1 according to a third embodiment of the present invention, and Fig. 5 shows a timing diagram for a control method for operating a multi-phase converter 1 according to a fourth embodiment of the present invention.

As can be seen from a comparison of Fig. 4 with Fig. 1, the converter 1 of the present embodiment is unidirectional. In other words, the secondary side circuit 7 comprises, on each switch leg 8, exactly one switch 9 and one diode 16. These switches 9 are referred to as "low-side" (i.e. "Ssal", "Ssbl", "Sscl").

During the boost operation mode, all secondary switches 9 are controlled to be simultaneously ON during each shorting step. Furthermore, depending on a predetermined voltage gain to be achieved, dT in the present embodiment is shorter than in the foregoing. Also in this embodiment, the shorting step is repeated periodically (i.e. every 1/6^{th} of T) six times per switching period T.

In the foregoing described control methods, the control is preferably repeated after the switching time period T.

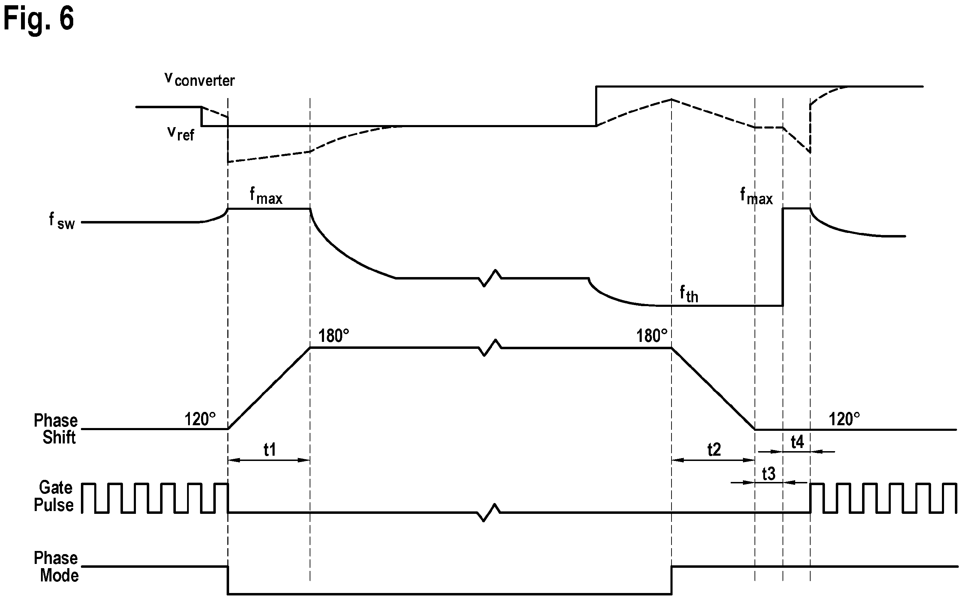

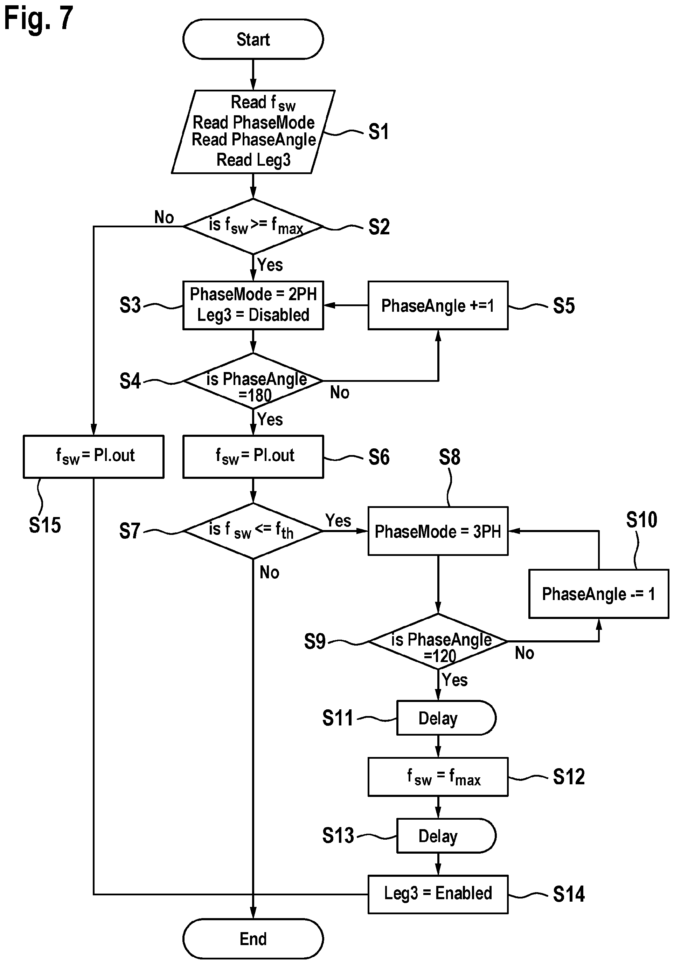

Now, with reference to Figs. 6 and 7, a control method for phase-modification operation will be described. Therein, Fig. 6 shows a timing diagram for a control method for operating a multi-phase converter 1 according to a fifth embodiment of the present invention, and Fig. 7 shows a flow chart for carrying out the control method according to the fifth embodiment of the present invention.

In particular, the control method of the present embodiment is employed in the SRC 1 of Fig. 1. However, the present control method is not particularly limited thereto, and may be employed in a unidirectional SRC 1 as shown in Fig. 4, or in an LLC or an SRC with three or six phases, for example.

The phase-modification operation mode of the present control method comprises a phase-reduction step of reducing an operating phase of the converter 1 by controlling all primary switches 5 of at least one primary switch leg 4 to be simultaneously OFF, wherein said primary switch leg 4 is defined as OFF-leg and the other primary switch leg(s) 4 is/are defined as operating leg(s), and wherein the primary switches 5 of operating leg(s) receive a pulse pattern.

In other words, during the phase-reduction step of the phase-modification operation mode, the number of phases of the multi-phase converter 1 is reduced by turning OFF all primary switches 5 of at least one primary switch leg 4.

In Fig. 6, the following denotations are chosen: "Vconverter" (dotted line) is the output voltage of the converter 1, "Vref" (solid line) is an output voltage requirement value, i.e. an output voltage required by a load connected to the output of the converter 1, "fsw" denotes an operating frequency requirement value, which is the frequency at which the primary switches 5 are to be switched in accordance with the output voltage requirement value Vref, "phase shift" denotes a phase shift between phases of pulse signals to the primary switches 5, "gate pulse" denotes schematically pulse signals to gates of primary switches 5 of one primary switch leg 4 (i.e. the OFF-leg), and "phase mode" denotes whether or not phase-reduction or phase-increase (to be describes later) is carried out.

Furthermore, "fmax" denotes a predetermined frequency maximum value. In the present embodiment, the predetermined frequency maximum value fmax is a maximum frequency at which the converter 1 can be operated (destruction-free). In addition, "fth" denotes a predetermined frequency threshold value which is lower than the predetermined frequency maximum value fmax. In the present embodiment, the predetermined frequency threshold value is a minimum frequency at which the converter 1 can be operated (destruction-free).

Here, it is assumed that the load (for example, a connected battery) requires a lower voltage Vref and thus a higher switching frequency fsw. However, the operating frequency requirement value fsw corresponding with this lower voltage Vref is higher than the predetermined frequency maximum value fmax.

Therefore, if the operating frequency requirement value fsw is equal to or higher than the predetermined frequency maximum value fmax, the phase-modification operation carries out the phase-reduction step at time t1. The phase mode is switched from high to low, with high corresponding to three-phase mode and low corresponding to two-phase mode.

As shown in Fig. 6, the gate pulses to the primary switches 5 of one primary switch leg 4 are turned OFF, such that said primary switch leg 4 is an OFF-leg.

Herein, the phase-reduction step comprises increasing a phase shift of pulse signals to primary switches 5 of the operating leg(s). The phase shift is increased from 120° (three-phase normal operation) to 180° (two-phase operation).

It should be noted that the phase shift is not generally limited to only the aforementioned 360°/n, but can also be (additionally) varied depending on required gain characteristics. In general, a reduction in phase shift (without considering the phase reduction step) reduces the output voltage (and the other way around). This further variation for adaptation of the output voltage can be carried out additionally to the aforementioned adaptation to the phase shift for phase-reduction, and is separate and distinct therefrom.

The phase-modification operation mode advantageously provides a reduction of output-voltage Vconverter without (further) increasing the operating frequency fsw of the switches 9. Herein, the output voltage Vconverter converges to the output voltage requirement value Vref at an operating frequency fsw lower than fmax.

Now, at time t2, it is assumed that the output voltage requirement value Vref rises again such that a lower operating frequency requirement value fsw is determined. Herein, however, the operating frequency requirement value fsw is equal to or lower than the predetermined frequency threshold value fth. Therefore, the phase-modification operation mode carries out a phase-increase step in which the operating phase of the converter 1 is increased.

Therein, at time t2, the control method/control unit 100 switches the phase mode from low to high. Further, the phase shift is decreased from 180° to 120°.

Further herein, during a predetermined time period t4 from a start of the phase-increase step, the operating frequency fsw of the converter 1 is set to the predetermined frequency maximum value fmax. Thereby, when switching from the reduced-phase operation to the increased-phase operation, the output voltage Vconverter is kept near or at a minimum (i.e. at the frequency maximum value fmax) so as to prevent overshoot and sudden high gain of the converter 1.

After the end of time period t4, the operating frequency fsw is reduced such that the output voltage Vconverter converges with the output voltage requirement value Vref.

After time period t4, pulse signals are again supplied to the primary switch leg 4 which was previously an OFF-leg, and is now (again) an operating leg.

Further, the predetermined frequency threshold value fth during phase-reduction and the predetermined frequency maximum value fmax during phase-increase are set in accordance with the gain of the converter 1 so as to be at equal gain. Thereby, overshoot during switching between phase-reduction and phase-increase is reduced or prevented.

Fig. 7 shows a flowchart for carrying out the control method according to the foregoing.

After start, in a first step S1, the control method, i.e. the control unit 100, reads the operating frequency requirement value fsw based on the output voltage requirement Vref, reads the current phase mode, the current phase angle (i.e. the phase shift between primary pulse signals), and reads Leg3, i.e. whether all primary switch legs 4 are operating.

In step S2, if the operating frequency requirement value fsw is equal to or higher than the frequency maximum value fmax, the method proceeds to step S3. Otherwise, it proceeds to step S15, in which PI.OUT is a proportional and integral controller output. Therein, step S15 leads to the operating frequency being set to the frequency requirement value fsw (which is less than fmax) as determined by the proportional and integral controller output, which is preferably a functional or discrete component of the control unit 100. In other words, the control unit 100 operates the converter 1 at fsw with no phase-reduction.

In step S3, the method sets the phase mode to the phase-reduction mode, i.e. to the low signal in Fig. 6. Further, Leg3, i.e. one of the primary switch legs 4 are turned OFF.

In step S4, the method determines whether the phase angle is 180°. If YES, then the method proceeds to step S6. If NO, the phase angle is increased until YES is determined in step S4.

In step S6, similar to step S15, after the phase angle is increased (YES in step S4), the converter 1 is operated at fsw in phase-reduced mode (PL.OUT sets the control to frequency requirement value fsw).

In step S7, the method determines whether the operating frequency requirement value fsw is equal to or lower than the predetermined frequency threshold value fth. If YES, the method proceeds to step S8, in which the phase-increase step is carried out by switching the phase mode to three-phase, i.e. the high signal in Fig. 6.

From there, the method again determines in step S9 whether the phase angle is 120°, and if NO, decreases the phase angle until YES is determined at step S9.

Further, step S11 includes a delay for allowing the output voltage Vconverter to stabilize. Then, in step S12, the operating frequency requirement value fsw is set to the frequency maximum value fmax, and a further delay is inserted in step S13. Lastly, in step S14, leg3 is again enabled to carry out three-phase operation.

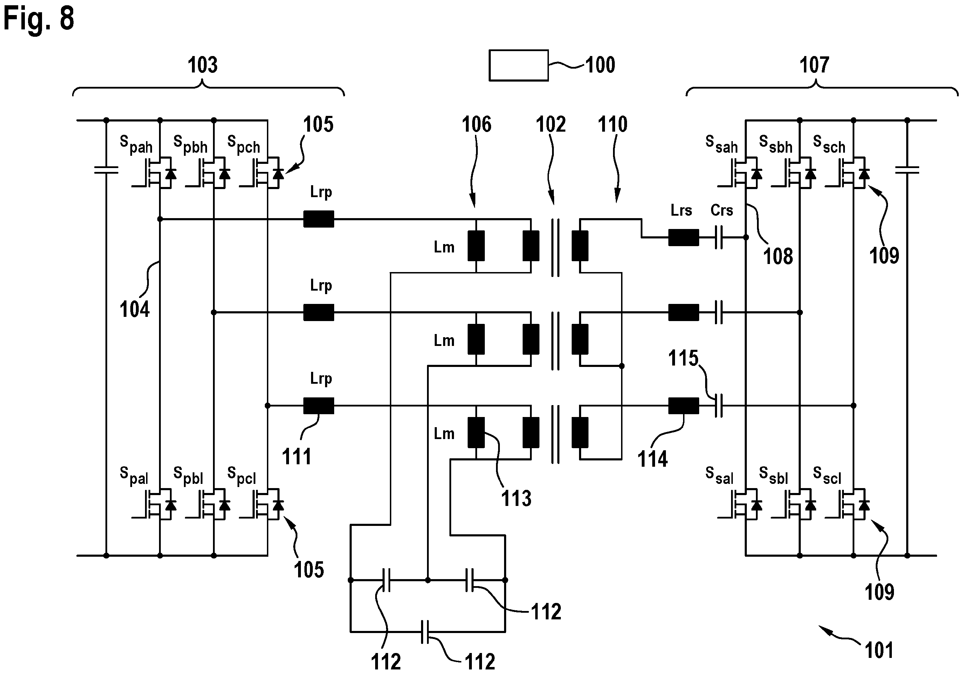

Fig. 8 shows a circuit diagram of a multi-phase LLC converter 101 according to a sixth embodiment of the present invention.

This converter 101 comprises a transformer 102, a primary side circuit 103 which comprises primary switch legs 104 with primary switches 105 connected to a primary side 106 of the transformer 102, and a secondary side circuit 107 which comprises secondary switch legs 108 each with at least one secondary switch 109 connected to a secondary side 110 of the transformer 102. Therein, the number of primary and secondary switch legs 104, 108 respectively corresponds to a number of phases of the multi-phase LLC resonant converter 101. In the present example, the secondary switch legs 108 respectively comprise two secondary switches 109 such that the LLC converter 101 is bidirectional.

The multi-phase LLC resonant converter 101 comprises resonant inductances 111, magnetizing inductors 113, and delta connected resonant capacitors 112. In alternative configurations, the multi-phase LLC resonant converter 101 comprises star connected resonant capacitors 112.

The secondary side circuit 107 comprises resonant inductors 114 (secondary side resonant inductors Lrs) and resonant capacitors 115 (secondary side resonant capacitors Crs).

Furthermore, this converter 101 comprises a control unit 100 configured to carry out the control method according to any one of the foregoing embodiments.

The foregoing embodiments may be combined. For example, the boost operation mode described with reference to Fig. 2 or with reference to Fig. 5 may preferably be combined with the phase-modification method described with reference to Figs. 6 and 7. Furthermore, the foregoing described methods and/or their combinations may suitably be applied to any one of the foregoing described converters 1, 101. In particular, the foregoing described methods and/or their combinations may suitably be applied to any one of the foregoing described converters 1, 101 with delta connected resonant capacitors 12, 112 or star connected resonant capacitors 12, 112. The foregoing described converters 101 may, in some examples, comprise delta connected resonant capacitors 115 or star connected resonant capacitors 115 in the secondary side circuit 107.

In addition to the foregoing written explanations, it is explicitly referred to figures 1 to 8, wherein the figures in detail show circuit diagrams and configuration examples of the invention.

### List of Reference Numerals

- 1: Multi-phase series resonant converter
- 2: transformer
- 3: primary side circuit
- 4: primary switch leg
- 5: primary switch
- 6: primary side of transformer
- 7: secondary side circuit
- 8: secondary switch leg
- 9: secondary switch
- 10: secondary side of transformer
- 11: resonant inductance
- 12: resonant capacitor
- 13: abscissa
- 14: ordinate
- 15: output capacitor
- 16: diode
- 100: control unit
- 101: Multi-phase LLC
- 102: transformer
- 103: primary side circuit
- 104: primary switch leg
- 105: primary switch
- 106: primary side of transformer
- 107: secondary side circuit
- 108: secondary switch leg
- 109: secondary switch
- 110: secondary side of transformer
- 111: resonant inductance
- 112: resonant capacitor
- 113: magnetizing inductor
- 114: resonant inductor
- 115: resonant capacitor
- S1 - S14: steps

## Claims

1. Control method for operating a multi-phase converter (1) with a number N of phases, N being at least three, said converter (1) comprising a transformer (2), a primary side circuit (3) which comprises primary switch legs (4) with primary switches (5) connected to a primary side (6) of the transformer (2), and a secondary side circuit (7) which comprises secondary switch legs (8) each with at least one secondary switch (9) connected to a secondary side (10) of the transformer (2), the number of primary and secondary switch legs (4, 8) respectively corresponding to a number of phases of the multi-phase converter (1), the control method comprising:
- a boost operation mode comprising a shorting step of shorting the secondary side circuit (7) by controlling a plurality of secondary switches (9) of separate secondary switch legs (8) to be simultaneously ON, wherein said shorting step is repeated periodically within one switching time period T; and/or
- a phase-modification operation mode comprising a phase-reduction step of reducing an operating phase of said converter (1) by controlling all primary switches (5) of at least one primary switch leg (4) to be simultaneously OFF, wherein said primary switch leg (4) is defined as OFF-leg and the other primary switch leg(s) (4) is/are defined as operating leg(s), and wherein the primary switches (5) of operating leg(s) receive a pulse pattern.

2. Control method according to claim 1, wherein, during the shorting step of the boost operation mode, one secondary switch (9) of each secondary switch leg (8) are controlled to be simultaneously ON.

3. Control method according to any one of the foregoing claims, wherein, during the boost operation mode, said shorting step is repeated 2N, especially six times, within one switching time period T.

4. Control method according to any one of the foregoing claims, wherein the secondary side circuit (7) is unidirectional and, during the boost operation mode, all secondary switches (9) are controlled to be simultaneously ON during the shorting step.

5. Control method according to any one of claims 1 to 3, wherein the secondary side circuit (7) is bidirectional, each secondary switch leg (8) having as secondary switches (9) one high-side secondary switch (Ssah, Ssbh, Ssch) and one low-side switch (Ssal, Ssbl, Sscl), and during the boost operation mode, all high-side switches (Ssah, Ssbh, Ssch) or all low-side switches (Ssal, Ssbl, Sscl) are controlled to be simultaneously ON during one shorting step.

6. Control method according to any one of the foregoing claims, wherein over one switching time period T, an average ON time of all secondary switches (9) is controlled to be substantially equal.

7. Control method according to any one of the foregoing claims, wherein the phase-reduction step comprises increasing a phase shift of pulse signals to primary switches (5) of the operating leg(s), wherein the phase shift is especially increased to 360°/n, n being the number of operating legs and equal to or greater than two.

8. Control method according to any one of the foregoing claims, wherein the phase-modification operation mode further comprises a phase-increase step of increasing an operating phase of said converter (1) after the phase-reduction step.

9. Control method according to claim 8, wherein the phase-increase step comprises decreasing a phase shift of pulse signals to the primary switches (5) of the operating leg(s).

10. Control method according to any one of the foregoing claims, further comprising:
• receiving an output voltage requirement value (Vref);
• determining an operating frequency requirement value (fsw) based on the output voltage requirement value (Vref);
• comparing the operating frequency requirement value (fsw) with a predetermined frequency maximum value (fmax), the predetermined frequency maximum value (fmax) especially being a maximum frequency at which the multi-phase converter (1) can be operated before the phase-reduction step; and
• if the operating frequency requirement value (fsw) is equal to or higher than the predetermined frequency maximum value (fmax), carrying out the phase-reduction step of the phase-modification operation mode.

11. Control method according to claim 10 with any one of claims 8 or 9, wherein the phase-increase step is carried out if the operating frequency requirement value (fsw) is equal to or lower than a predetermined frequency threshold value (fth), the predetermined frequency threshold value (fth) being lower than the predetermined frequency maximum value (fmax).

12. Multi-phase series resonant converter (1), comprising:
• a transformer (2);
• a primary side circuit (3) which comprises primary switch legs (4) with primary switches (5) connected to a primary side (6) of the transformer (2); and
• a secondary side circuit (7) which comprises secondary switch legs (8) each with at least one secondary switch (9) connected to a secondary side (10) of the transformer (2), wherein
• the number of primary and secondary switch legs (4, 8) respectively corresponds to a number of phases of the multi-phase series resonant converter (1), and
• the primary side circuit (3) comprises delta connected series resonant capacitors (12).

13. Multi-phase series resonant converter (1) according to claim 12, further comprising a control unit (100) configured to carry out the control method according to any one of claims 1 to 11.

14. Multi-phase series resonant converter (1) according to claim 12 or 13, wherein said converter (1) is:
• unidirectional, wherein each secondary switch leg (8) comprises one secondary switch (9) and one diode (16) in series with one another; or
• bidirectional, wherein each secondary switch leg (8) comprises two secondary switches (9) in series with one another.

15. Multi-phase LLC resonant converter (101), comprising:
• a transformer (102);
• a primary side circuit (103) which comprises primary switch legs (104) with primary switches (105) connected to a primary side (106) of the transformer (102);
• a secondary side circuit (107) which comprises secondary switch legs (108) each with at least one secondary switch (109) connected to a secondary side (110) of the transformer (102), wherein the number of primary and secondary switch legs (104, 108) respectively corresponds to a number of phases of the multi-phase LLC resonant converter (101); and
• a control unit (100) configured to carry out the control method according to any one of claims 1 to 11.
